Europäisches Patentamt

European Patent Office

Office européen des brevets

(19)

(11) **EP 0 828 206 B1**

(12) **FASCICULE DE BREVET EUROPEEN**

(45) Date de publication et mention
de la délivrance du brevet:
**06.12.2000 Bulletin 2000/49**

(51) Int Cl.$^7$: **G05D 1/00**, B64D 31/10,
F02C 9/42

(21) Numéro de dépôt: **97402040.6**

(22) Date de dépôt: **02.09.1997**

(54) **Dispositif de contrôle de la poussée d'un aéronef à plusieurs moteurs**

Einrichtung zur Regelung des Schubes eines mehrmotorigen Flugzeuges

Device for controlling the thrust of a multi-engine aircraft

(84) Etats contractants désignés:
**DE ES GB IT**

(30) Priorité: **09.09.1996 FR 9610965**

(43) Date de publication de la demande:
**11.03.1998 Bulletin 1998/11**

(73) Titulaire: **AEROSPATIALE MATRA**
**75016 Paris (FR)**

(72) Inventeurs:
• **Larramendy, Panxika**
**31400 Toulouse (FR)**

• **Zaccaria, Patrick**
**31100 Toulouse (FR)**
• **Clavel, Thierry**
**31700 Blagnac (FR)**
• **Garavel, François**
**31000 Toulouse (FR)**

(74) Mandataire: **Bonnetat, Christian**
**CABINET BONNETAT**
**29, rue de St. Pétersbourg**
**75008 Paris (FR)**

(56) Documents cités:
EP-A- 0 344 389      FR-A- 2 308 975
FR-A- 2 710 026      US-A- 4 884 205

**Description**

La présente invention concerne un dispositif de contrôle de la poussée d'un aéronef, engendrée par une pluralité de moteurs.

Plus précisément, la présente invention s'applique à un aéronef, notamment un avion de transport civil, pourvu d'une pluralité de moteurs agencés sensiblement en ligne de façon orthogonale à l'axe longitudinal de l'aéronef et disposés respectivement de façon symétrique par rapport audit axe longitudinal.

Pour un tel aéronef, on définit généralement une vitesse minimale prescrite qui correspond à la vitesse minimale pour laquelle il est possible de contrôler le comportement latéral de l'aéronef, en cas de dissymétrie de la poussée due à la panne d'un moteur. Cette vitesse minimale prescrite est caractérisée par le fait que, lorsqu'un moteur externe est en panne, que la gouverne de direction est braquée au maximum et que les moteurs en fonctionnement sont à pleine poussée, le cap peut être maintenu avec moins de 5° de roulis.

Par conséquent, un tel aéronef à plusieurs moteurs doit présenter, lorsqu'il est sur une trajectoire d'approche et que tous ses moteurs sont en fonctionnement, une vitesse supérieure à ladite vitesse minimale prescrite pour, en cas de panne d'un de ses moteurs, pouvoir mettre les autres moteurs à pleine poussée (remise des gaz), tout en conservant un angle de roulis inférieur à 5°. Bien entendu, pour que le braquage de la gouverne de direction ait un effet suffisant, il faut que la vitesse soit suffisante.

Par conséquent, ladite vitesse minimale prescrite entraîne une limitation importante et désavantageuse du domaine de vol de l'aéronef.

Par ailleurs, on sait qu'un aéronef doit respecter plusieurs contraintes réglementaires liées directement à la poussée disponible et donc indirectement à ladite vitesse minimale prescrite.

D'une part, lorsqu'en cours d'atterrissage, un aéronef doit, pour une raison quelconque, remettre les gaz, la poussée disponible doit lui permettre de respecter des contraintes réglementaires strictes en ce qui concerne la pente de montée. Cette dernière doit, en effet, être supérieure à une valeur prédéterminée qui est différente selon qu'un moteur est en panne ou non. Si l'aéronef n'est pas en mesure de respecter ces contraintes, la seule solution possible est de diminuer la masse maximale admissible à l'atterrissage.

D'autre part, une autre contrainte réglementaire impose à l'aéronef de pouvoir se poser sur la piste de décollage et d'atterrissage quinze minutes après y avoir décollé. A cet effet, sa masse ne doit pas dépasser une masse maximale prescrite pour l'atterrissage, qui est directement liée à la poussée disponible. Pour satisfaire cette condition, on doit, soit équiper ledit aéronef d'un système pour délester son carburant, soit limiter sa masse au décollage. Aucune de ces solutions n'est bien entendu satisfaisante, notamment en ce qui concerne l'optimisation des performances de l'aéronef.

Par le document US-A-4 884 205, on connaît un dispositif de contrôle de la poussée d'un aéronef, comprenant :

- une pluralité de moteurs agencés symétriquement sur une ligne orthogonale à l'axe longitudinal de l'aéronef ;
- des moyens de calcul qui déterminent des premiers ordres de commande du régime des moteurs et adressent lesdits premiers ordres de commande aux moteurs associés ;
- des moyens de contrôle qui surveillent le fonctionnement desdits moteurs et détectent les pannes desdits moteurs ; et
- des moyens de calcul qui déterminent des seconds ordres de commande, permettant d'obtenir une réduction de la poussée des moteurs relativement auxdits premiers ordres de commande.

La présente invention a pour objet de remédier aux inconvénients précités. Elle concerne un dispositif de contrôle de la poussée d'un aéronef à plusieurs moteurs, permettant de limiter, de façon simple, efficace et peu coûteuse, la vitesse minimale prescrite précitée de l'aéronef.

A cet effet, selon l'invention, ledit dispositif qui comporte :

- des unités de calcul associées respectivement à chacun desdits moteurs, chacune desdites unités de calcul étant une unité de détermination de premiers ordres de commande du régime du moteur associé et d'adressage desdits premiers ordres de commande audit moteur associé ;
- des moyens de contrôle, de surveillance respectivement du fonctionnement d'au moins certains desdits moteurs et de détection des pannes desdits moteurs surveillés ; et
- des moyens de calcul associés respectivement au moins aux unités de calcul associées auxdits moteurs surveillés, de détermination de seconds ordres de commande du régime desdits moteurs surveillés, permettant d'obtenir une réduction de la poussée de ces derniers relativement auxdits premiers ordres de commande,

est remarquable en ce qu'il comporte de plus des moyens de commutation associés auxdits moyens de calcul et aux unités de calcul correspondantes, d'adressage :

- lors du fonctionnement normal desdits moteurs surveillés, à ces derniers des premiers ordres de commande correspondants ; et
- lors d'une panne d'un desdits moteurs surveillés, des seconds ordres de commande correspondants, à au moins un moteur situé sur le côté opposé à celui dudit moteur en panne, par rapport à l'axe longitudinal de l'aéronef.

Ainsi, grâce à l'invention, en diminuant en cas de panne la poussée sur le côté opposé à celui du moteur en panne, on réduit la dissymétrie de poussée induite par cette panne, ce qui permet de réduire la vitesse minimale prescrite de l'aéronef.

Cette réduction entraîne, notamment, les avantages suivants :

- elle diminue la zone de masse limitée par ladite vitesse minimale prescrite, ce qui permet en particulier d'améliorer la sécurité pour le contrôle latéral d'un aéronef à vitesse et masse réduites, avec un moteur en panne ; et
- elle diminue la vitesse opérationnelle, et donc la vitesse d'approche et la longueur de piste, nécessaires à l'atterrissage.

De plus, si la vitesse opérationnelle n'est plus limitée par la vitesse minimale prescrite, on peut conserver une incidence d'approche identique, quelle que soit la masse de l'aéronef.

Le dispositif conforme à l'invention peut être mis en oeuvre selon cinq modes de réalisation différents.

Dans un premier mode de réalisation particulièrement avantageux de l'invention, ledit dispositif conforme à l'invention comporte des moyens de contrôle, des moyens de calcul et des moyens de commutation associés aux deux moteurs externes, les plus éloignés de part et d'autre de l'axe longitudinal de l'aéronef, et destinés à réduire, lors d'une panne d'un desdits moteurs externes, la poussée de l'autre moteur externe.

Dans un deuxième mode de réalisation, le dispositif conforme à l'invention comporte des moyens de contrôle, des moyens de calcul et des moyens de commutation associés à chacun des moteurs de l'aéronef et destinés à réduire, lors d'une panne d'un moteur quelconque de l'aéronef, la poussé du moteur opposé audit moteur en panne, par rapport à l'axe longitudinal de l'aéronef.

Dans un troisième mode de réalisation, ledit dispositif conforme à l'invention comporte des moyens de contrôle, des moyens de calcul et des moyens de commutation associés à chacun des moteurs de l'aéronef, et destinés à réduire, lors d'une panne d'un des deux moteurs externes, les plus éloignés de part et d'autre de l'axe longitudinal de l'aéronef, la poussée de tous les moteurs situés sur le côté opposé à celui dudit moteur en panne, par rapport à l'axe longitudinal de l'aéronef.

Dans un quatrième mode de réalisation, le dispositif conforme à l'invention comporte des moyens de contrôle, des moyens de calcul et des moyens de commutation associés à chacun des moteurs de l'aéronef et destinés à réduire, lors d'une panne d'un moteur quelconque de l'aéronef, la poussée du moteur externe situé sur le côté opposé à celui dudit moteur en panne, par rapport à l'axe longitudinal de l'aéronef.

Dans un cinquième mode de réalisation, permettant de généraliser le principe de l'invention, le dispositif conforme à l'invention comporte des moyens de contrôle, des moyens de calcul et des moyens de commutation associés à chacun des moteurs de l'aéronef et destinés à réduire, lors d'une panne d'un moteur quelconque de l'aéronef, la poussée de tous les moteurs situés sur le côté opposé à celui dudit moteur en panne, par rapport à l'axe longitudinal de l'aéronef.

De façon avantageuse, lesdits moyens de calcul déterminent lesdits seconds ordres de commande uniquement lorsque l'aéronef est situé dans un domaine de vol déterminé. De préférence, ce dernier est défini par les deux conditions cumulatives suivantes : la vitesse (ou bien entendu le nombre de Mach) et l'altitude de l'aéronef sont inférieures à des valeurs prédéfinies.

Par ailleurs, avantageusement, lesdits moyens de calcul et lesdits moyens de commutation sont intégrés à chaque fois dans l'unité de calcul associée, ce qui permet de réduire l'encombrement du dispositif conforme à l'invention.

En outre, de préférence, lesdits moyens de contrôle détectent une panne d'un moteur surveillé, lorsque la valeur d'un paramètre caractéristique du fonctionnement dudit moteur, par exemple le régime du module de basse pression, est située à l'extérieur d'un domaine de valeurs prédéterminées admissibles.

De plus, avantageusement, lesdits seconds ordres de commande du régime moteur sont déterminés en fonction de l'altitude, de la température et de la vitesse de l'aéronef.

En outre, de préférence, lesdits seconds ordres de commande du régime moteur sont déterminés de manière à obtenir une poussée pour laquelle on peut équilibrer l'aéronef, en cas de panne d'un desdits moteurs, à une vitesse prédéterminée qui est choisie inférieure à ladite vitesse minimale prescrite initialement de manière à obtenir une vitesse minimale réduite.

Par ailleurs, dans un premier mode de réalisation de l'invention, les moyens de contrôle associés à une paire de moteurs opposés sont reliés ensemble et se communiquent mutuellement les informations de panne détectées, tandis que, dans un second mode de réalisation, lesdits moyens de contrôle sont intégrés dans une unité centrale de contrôle, ce qui permet de réduire le nombre d'éléments nécessaires au contrôle.

Les figures du dessin annexé feront bien comprendre comment l'invention peut être réalisée. Sur ces figures, des références identiques désignent des éléments semblables.

La figure 1 montre schématiquement un aéronef à plusieurs moteurs, auquel est appliqué un dispositif conforme à l'invention.

La figure 2 illustre schématiquement un dispositif conforme à l'invention.

La figure 3 est le schéma synoptique d'une unité de calcul d'un dispositif conforme à l'invention.

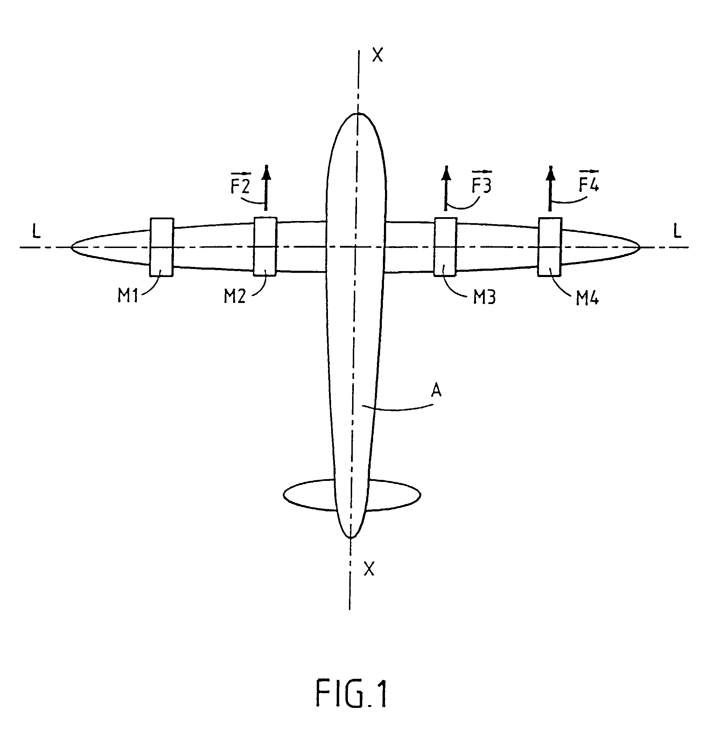

Le dispositif 1 conforme à l'invention est destiné au contrôle de la poussée d'un aéronef A, par exemple un avion de transport civil, muni d'une pluralité de moteurs M1 à M4, agencés selon une ligne L-L orthogonale à l'axe longitudinal X-X de l'aéronef A et disposés respectivement de façon symétrique par rapport audit axe longitudinal X-X, tel que représenté schématiquement sur la figure 1.

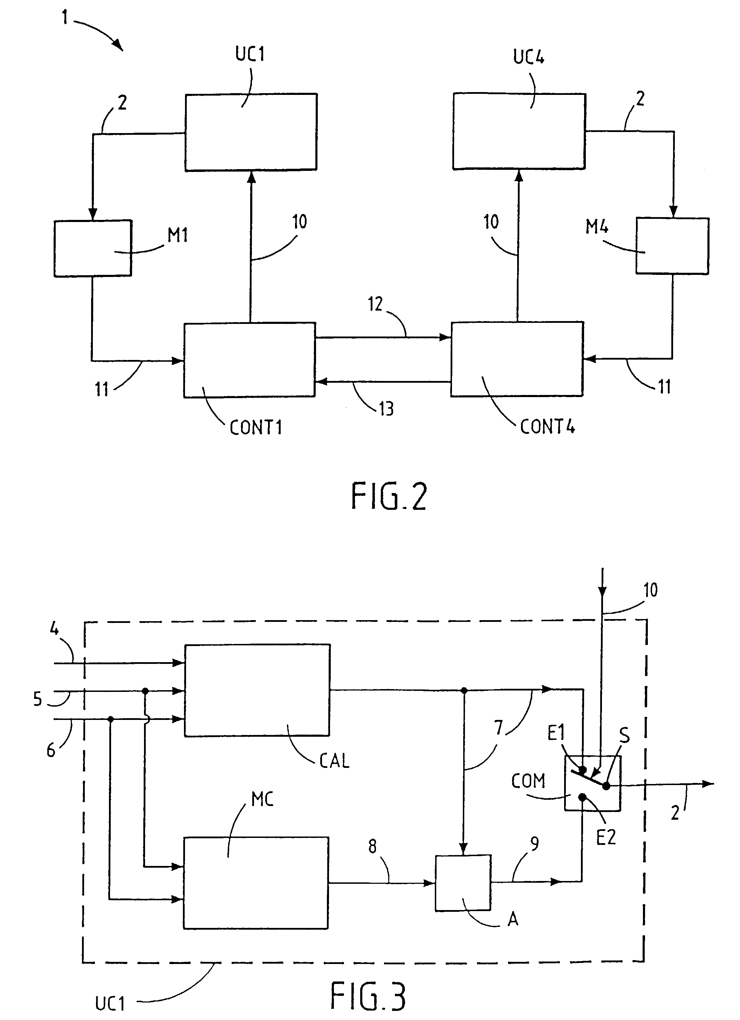

De façon connue, ledit dispositif 1 comporte, pour chacun des moteurs M1 à M4, et comme représenté sur la figure 2 pour les moteurs M1 et M4, une unité de calcul, respectivement UC1 et UC4, qui détermine des premiers ordres de commande du régime du moteur associé et qui adresse lesdits premiers ordres de commande audit moteur associé, par l'intermédiaire respectivement de liaisons 2. Dans le mode de réalisation représenté, lesdits premiers ordres de commande sont calculés par un calculateur CAL intégré dans l'unité de calcul, par exemple l'unité de calcul UC1 représentée sur la figure 3, à partir des conditions ambiantes, c'est-à-dire à partir de la température, de la vitesse et de l'altitude de l'aéronef A, qui sont transmises audit calculateur CAL respectivement par des liaisons 4 à 6. La température, la vitesse (ou le nombre de Mach) et l'altitude de l'aéronef A sont issues à cet effet de dispositifs appropriés et non représentés.

Conformément à l'invention, ledit dispositif 1 est destiné à réduire la vitesse minimale prescrite de l'aéronef A. De façon connue, cette vitesse minimale prescrite correspond à la vitesse minimale, pour laquelle il est possible de contrôler le comportement latéral de l'aéronef A, en cas de dissymétrie de la poussée due à la panne d'un moteur.

Dans la description suivante, on suppose que le moteur M1 est en panne et que les moteurs M2 à M4 engendrent des poussées, dont les actions sont illustrées respectivement par des flèches F2 à F4 sur la figure 1.

Pour réduire la vitesse minimale prescrite de l'aéronef A, le dispositif 1 du type précité comporte, de plus, selon l'invention :

- des moyens de contrôle CONT1 et CONT4 qui surveillent respectivement le fonctionnement des deux moteurs externes M1 et M4, les plus éloignés de part et d'autre de l'axe longitudinal X-X de l'aéronef A et qui détectent les pannes desdits moteurs externes M1 et M4, tel que représenté sur la figure 2 ; et
- des moyens de calcul MC et des moyens de commutation COM intégrés dans les unités de calcul UC1 et UC4 correspondantes, tel que représenté sur la figure 3 pour l'unité de calcul UC1.

Lesdits moyens de calcul MC déterminent des seconds ordres de commande du régime du moteur externe associé, permettant d'obtenir une réduction de la poussée de ce dernier relativement aux premiers ordres de commande déterminés par le calculateur CAL. Ces moyens de calcul MC ne sont activés que lorsque l'aéronef A est situé dans un domaine de vol déterminé :

- pour lequel sa vitesse (reçue par la liaison 5) est inférieure à une valeur prédéterminée ; et
- pour lequel son altitude (reçue par la liaison 6) est également inférieure à une valeur prédéterminée.

Comme on peut le voir sur la figure 3, chacune des unités de calcul UC1 et UC4 comporte, de plus, un comparateur A qui compare le cas échéant le premier ordre de commande reçue du calculateur CAL par l'intermédiaire d'une liaison 7 dédoublée, au second ordre de commande reçu des moyens de calcul MC par l'intermédiaire d'une liaison 8, et qui transmet la valeur la plus faible par une liaison 9 à une entrée E2 des moyens de commutation COM.

L'autre entrée E1 desdits moyens de commutation COM est reliée à la liaison dédoublée 7 et reçoit donc lesdits premiers ordres de commande.

Ces moyens de commutation COM qui sont commandés, comme précisé ci-dessous, par l'intermédiaire d'une liaison 10, transmettent selon leur état de commutation l'un desdits premier et second ordres de commande (liaison 2 à la sortie S) au moteur externe associé.

La commande desdits moyens de commutation COM est réalisée par les moyens de contrôle CONT1 ou CONT4 qui surveillent les moteurs externes M1 et M4, comme indiqué par des liaisons 11. Selon l'invention, une panne d'un desdits moteurs externes est détectée, lorsque la valeur d'un paramètre caractéristique du fonctionnement du moteur est située à l'extérieur d'un domaine de valeurs prédéterminées admissibles, par exemple lorsque le régime du module de basse pression du moteur est inférieur à une valeur prédéterminée.

Une telle détection de panne est transmise du moyen de contrôle correspondant, par exemple le moyen de contrôle CONT1 pour une panne du moteur M1, à l'autre moyen de contrôle CONT4, lesdits moyens de contrôle CONT1 et CONT4 étant reliés ensemble à cet effet par des liaisons 12 et 13.

Ainsi, les moyens de contrôle CONT1 et CONT4 peuvent s'échanger des informations discrètes sur l'état de disponibilité du moteur associé surveillé. A cet effet, à titre d'exemple, un circuit ouvert peut correspondre à une information "pas de poussée" et un circuit fermé à une information "poussée disponible". De plus, pour des raisons de sécurité, on double de préférence les liaisons 12 et 13, notamment pour pouvoir pallier une éventuelle rupture d'une desdites liaisons.

Plus précisément, selon l'invention, les moyens de commutation COM sont commandés par les moyens de contrôle CONT1 ou CONT4 correspondants, de sorte que :

- lors du fonctionnement normal desdits moteurs externes M1 et M4, ils adressent à ces derniers les premiers ordres de commande correspondants (entrée E1 activée) ; et
- lors d'une panne d'un desdits moteurs externes, par exemple M1, ils adressent au moteur externe M4 opposé audit moteur M1 en panne, les ordres de commande transmis par le comparateur A de l'unité de calcul UC1 (entrée E2 activée).

Ainsi, grâce à l'invention, lors d'une panne d'un moteur externe, on réduit la poussée engendrée par l'autre moteur externe, dans la partie du domaine de vol où cela est nécessaire, ce qui permet de réduire la vitesse minimale prescrite et entraîne les avantages importants précités.

Le dispositif 1 conforme à l'invention permet ainsi de délivrer une poussée nécessaire lors d'une remise de gaz avec un moteur en panne, tout en satisfaisant les deux critères suivants :

- un contrôle latéral satisfaisant de l'aéronef A ; et
- un maintien de la trajectoire conformément aux pentes réglementaires prescrites.

Bien entendu, dans le cadre de la présente invention, on peut également envisager :

- un mode de réalisation, dans lequel on réduit la poussée de tout moteur opposé à un moteur en panne, et pas seulement la poussée du moteur externe opposé à l'autre moteur externe en panne, comme cela est le cas dans l'exemple décrit précédemment ;
- un mode de réalisation, dans lequel on réduit la poussée du moteur externe situé sur le côté opposé à celui d'un moteur quelconque en panne ; et
- un mode de réalisation généralisé, dans lequel on réduit la poussée de tous les moteurs situés sur le côté opposé à celui d'un moteur en panne, qu'il soit externe ou non.

## Revendications

1. Dispositif de contrôle de la poussée d'un aéronef (A), engendrée par une pluralité de moteurs (M1 à M4) agencés sensiblement en ligne (L-L) de façon orthogonale à l'axe longitudinal (X-X) de l'aéronef (A) et disposés respectivement de façon symétrique par rapport audit axe longitudinal (X-X), ledit dispositif comportant :

   - des unités de calcul (UC1, UC4) associées respectivement à chacun desdits moteurs, chacune desdites unités de calcul (UC1, UC4) étant une unité de détermination de premiers ordres de commande du régime du moteur associé et d'adressage desdits premiers ordres de commande audit moteur associé ;
   - des moyens de contrôle (CONT1, CONT4) de surveillance respectivement du fonctionnement d'au moins certains desdits moteurs (M1, M4) et de détection des pannes desdits moteurs surveillés (M1, M4) ; et
   - des moyens de calcul (MC) associés respectivement au moins aux unités de calcul (UC1, UC4) associées auxdits moteurs surveillés (M1, M4), de détermination de seconds ordres de commande du régime desdits moteurs surveillés (M1, M4), permettant d'obtenir une réduction de la poussée de ces derniers relativement auxdits premiers ordres de commande,

   caractérisé en ce qu'il comporte de plus des moyens de commutation (COM) associés auxdits moyens de calcul (MC) et aux unités de calcul correspondantes (UC1, UC4), d'adressage :

   - lors du fonctionnement normal desdits moteurs surveillés (M1, M4), à ces derniers des premiers ordres de commande correspondants ; et
   - lors d'une panne d'un desdits moteurs surveillés (M1), des seconds ordres de commande correspondants, à au moins un moteur (M4) situé sur le côté opposé à celui dudit moteur (M1) en panne, par rapport à l'axe longitudinal (X-X) de l'aéronef (A).

2. Dispositif selon la revendication 1, caractérisé en ce qu'il comporte des moyens de contrôle (CONT1, CONT4), des moyens de calcul (MC) et des moyens de commutation (COM) associés aux deux moteurs externes (M1, M4), les plus éloignés de part et d'autre de l'axe longitudinal (X-X) de l'aéronef (A), et destinés à réduire, lors d'une panne d'un desdits moteurs externes (M1), la poussée de l'autre moteur externe (M4).

3. Dispositif selon la revendication 1, caractérisé en ce qu'il comporte des moyens de contrôle, des moyens de calcul et des moyens de commutation associés à chacun des moteurs (M1 à M4) de l'aéronef (A) et destinés à réduire, lors d'une panne d'un moteur quelconque de l'aéronef (A), la poussée du moteur opposé audit moteur en panne, par rapport à l'axe longitudinal (X-X) de l'aéronef (A).

4. Dispositif selon la revendication 1, caractérisé en ce qu'il comporte des moyens de contrôle (CONT1, CONT4), des moyens de calcul (MC) et des moyens de commutation (COM) associés à chacun des moteurs (M1 à M4) de l'aéronef (A), et destinés à réduire, lors d'une panne d'un des deux moteurs externes (M1), les plus éloignés de part et d'autre de l'axe longitudinal (X-X), la poussée de tous les moteurs situés sur le côté opposé à celui dudit moteur en panne, par rapport à l'axe longitudinal (X-X) de l'aéronef (A).

**5.** Dispositif selon la revendication 1, caractérisé en ce qu'il comporte des moyens de contrôle, des moyens de calcul et des moyens de commutation associés à chacun des moteurs (M1 à M4) de l'aéronef (A) et destinés à réduire, lors d'une panne d'un moteur quelconque de l'aéronef (A), la poussée du moteur externe situé sur le côté opposé à celui dudit moteur en panne, par rapport à l'axe longitudinal (X-X) de l'aéronef (A).

**6.** Dispositif selon la revendication 1, caractérisé en ce qu'il comporte des moyens de contrôle, des moyens de calcul et des moyens de commutation associés à chacun des moteurs (M1 à M4) de l'aéronef (A) et destinés à réduire, lors d'une panne d'un moteur quelconque de l'aéronef (A), la poussée de tous les moteurs situés sur le côté opposé à celui dudit moteur en panne, par rapport à l'axe longitudinal (X-X) de l'aéronef (A).

**7.** Dispositif selon l'une quelconque des revendications 1 à 6, caractérisé en ce que lesdits moyens de calcul (MC) déterminent lesdits seconds ordres de commande uniquement lorsque l'aéronef (A) est situé dans un domaine de vol déterminé.

**8.** Dispositif selon la revendication 7, caractérisé en ce que ledit domaine de vol est défini par les deux conditions cumulatives suivantes : la vitesse et l'altitude de l'aéronef sont inférieures à des valeurs prédéfinies.

**9.** Dispositif selon l'une quelconque des revendications 1 à 8, caractérisé en ce que lesdits moyens de calcul (MC) et lesdits moyens de commutation (COM) sont intégrés à chaque fois dans l'unité de calcul associée (UC1).

**10.** Dispositif selon l'une quelconque des revendications précédentes, caractérisé en ce que lesdits moyens de contrôle (CONT1, CONT4) détectent une panne d'un moteur surveillé, lorsque la valeur d'un paramètre caractéristique du fonctionnement dudit moteur est située à l'extérieur d'un domaine de valeurs prédéterminées admissibles.

**11.** Dispositif selon la revendication 10,

caractérisé en ce que ledit paramètre caractéristique du fonctionnement du moteur représente le régime du module de basse pression dudit moteur.

**12.** Dispositif selon l'une quelconque des revendications précédentes, caractérisé en ce que lesdits seconds ordres de commande du régime moteur sont déterminés en fonction de l'altitude, de la température et de la vitesse de l'aéronef.

**13.** Dispositif selon l'une quelconque des revendications précédentes, caractérisé en ce que lesdits seconds ordres de commande du régime moteur sont déterminés de manière à obtenir une poussée pour laquelle on peut équilibrer l'aéronef, en cas de panne d'un desdits moteurs, à une vitesse prédéterminée.

**14.** Dispositif selon l'une quelconque des revendications 1 à 13, caractérisé en ce que les moyens de contrôle (CONT1, CONT4) associés à une paire de moteurs opposés sont reliés ensemble.

**15.** Dispositif selon l'une quelconque des revendications 1 à 13, caractérisé en ce que tous lesdits moyens de contrôle sont intégrés dans une unité centrale de contrôle.

**Patentansprüche**

**1.** Einrichtung zur Regelung des Schubs eines Flugzeugs (A), der von mehreren Motoren (M1 bis M4) erzeugt wird, die im wesentlichen in einer Reihe (L-L) senkrecht zu Längsachse (X-X) des Flugzeugs (A) und symmetrisch zur genannten Längsachse (X-X) angeordnet sind, wobei die genannte Einrichtung folgendes umfaßt:

- Recheneinheiten (UC1, UC4), die jeweils jedem der genannten Motoren zugeordnet sind, wobei jede der genannten Recheneinheiten (UC1, UC4) eine Einheit zur Ermittlung von ersten Steuerbefehlen für die Drehzahl des zugeordneten Motors und zur Adressierung der genannten ersten Steuerbefehle an den genannten zugeordneten Motor ist;
- Mittel zur Regelung (CONT1, CONT4) beziehungsweise zur Überwachung des Betriebs von mindestens bestimmten der genannten Motoren (M1, M4) und zur Ermittlung von Ausfällen der genannten überwachten Motoren (M1, M4) und
- Rechenmittel (MC), die jeweils mindestens den zu den genannten überwachten Motoren (M1, M4) gehörenden Recheneinheiten (UC1, UC4) zugeordnet sind, Mittel zur Ermittlung von zweiten Steuerbefehlen für die Drehzahl der genannten überwachten Motoren (M1, M4), die es gestatten, eine Verringerung des Schubes letzterer im Verhältnis zu den ersten Steuerbefehlen zu erzielen,

dadurch gekennzeichnet, daß sie weiterhin Schaltmittel (COM) umfaßt, die den genannten Rechenmitteln (MC) und den entsprechenden Recheneinheiten (UC1, UC4) zugeordnet sind und

- bei Normalbetrieb der genannten überwachten Motoren (M1, M4) an letztere entsprechende erste Steuerbefehle richten und
- bei Ausfall eines der genannten überwachten Motoren (M1) entsprechende zweite Steuerbefehle an mindestens einen Motor (M4) gibt, der in Bezug auf die Längsachse (X-X) des Flugzeugs (A) gegenüber dem ausgefallenen Motor (M1) liegt.

2. Einrichtung nach Anspruch 1,
dadurch gekennzeichnet, daß sie Regelungsmittel (CONT1, CONT4), Rechenmittel (MC) und Schaltmittel (COM) umfaßt, die den beiden externen, beiderseits der Längsachse (X-X) des Flugzeugs (A) am weitesten außen liegenden Motoren (M1, M4) zugeordnet sind und bei Ausfall eines dieser genannten Außenmotoren (M1) den Schub des anderen Außenmotors (M4) verringern sollen.

3. Einrichtung nach Anspruch 1,
dadurch gekennzeichnet, daß sie Regelungsmittel, Rechenmittel und Schaltmittel umfassen, die jedem Motor (M1 bis M4) des Flugzeugs (A) zugeordnet sind und bei Ausfall eines beliebigen Motors des Flugzeugs (A) den Schub des dem ausgefallenen Motor in Bezug auf die Längsachse (X-X) des Flugzeugs (A) gegenüberliegenden Motors verringern sollen.

4. Einrichtung nach Anspruch 1,
dadurch gekennzeichnet, daß sie Regelungsmittel (CONT1, CONT4), Rechenmittel (MC) und Schaltmittel (COM) umfaßt, die jedem Motor (M1, M4) des Flugzeugs (A) zugeordnet sind und bei Ausfall eines der beiden externen, in Bezug auf die Längsachse (X-X) am weitesten außen liegenden Motoren (M1) des Flugzeugs (A) den Schub aller auf der dem ausgefallenen Motor in Bezug auf die Längsachse (X-X) des Flugzeugs (A) gegenüberliegenden Seite liegenden Motoren verringern sollen.

5. Einrichtung nach Anspruch 1,
dadurch gekennzeichnet, daß sie Regelungsmittel, Rechenmittel und Schaltmittel umfaßt, die jedem Motor (M1 bis M4) des Flugzeugs (A) zugeordnet sind und bei Ausfall eines beliebigen Motors des Flugzeugs (A) den Schub des Außenmotors verringern sollen, der auf der dem ausgefallenen Motor in Bezug auf die Längsachse (X-X) des Flugzeugs (A) gegenüberliegenden Seite liegt.

6. Einrichtung nach Anspruch 1,
dadurch gekennzeichnet, daß sie Regelungsmittel, Rechenmittel und Schaltmittel umfaßt, die jedem Motor (M1 bis M4) des Flugzeugs (A) zugeordnet sind und bei Ausfall eines beliebigen der Motoren des Flugzeugs (A) den Schub aller Motoren verringern sollen, die auf der dem ausgefallenen Motor in Bezug auf die Längsachse (X-X) des Flugzeugs (A) gegenüberliegenden Seite angeordnet sind.

7. Einrichtung nach einem der Ansprüche 1 bis 6,
dadurch gekennzeichnet, daß die genannten Rechenmittel (MC) die genannten zweiten Steuerbefehle nur ermitteln, wenn sich das Flugzeug (A) in einem bestimmten Flugbereich befindet.

8. Einrichtung nach Anspruch 7,
dadurch gekennzeichnet, daß der genannte Flugbereich durch die beiden folgenden kumulativen Bedingungen definiert wird: die Geschwindigkeit und die Höhe des Flugzeugs liegen unter vorher definierten Werten.

9. Einrichtung nach einem der Ansprüche 1 bis 8,
dadurch gekennzeichnet, daß die genannten Rechenmittel (MC) und die genannten Schaltmittel (MC) jeweils in die zugehörige Recheneinheit (UC1) integriert sind.

10. Einrichtung nach einem der vorstehenden Ansprüche,
dadurch gekennzeichnet, daß die genannten Regelungsmittel (CONT1, CONT4) einen Ausfall eines überwachten Motors feststellen, wenn Wert eines Betriebskennwerts des genannten Motors außerhalb eines Bereichs von vorher ermittelten zulässigen Werten liegt.

11. Einrichtung nach Anspruch 10,
dadurch gekennzeichnet, daß der genannte Betriebskennwert des Motors die Leistung des Niederdruckmoduls des genannten Motors darstellt.

12. Einrichtung nach einem der vorstehenden Ansprüche,
dadurch gekennzeichnet, daß die genannten zweiten Steuerbefehle für die Motordrehzahl in Abhängigkeit von der Höhe, der Temperatur und der Geschwindigkeit des Flugzeugs ermittelt werden.

**13.** Einrichtung nach einem der vorstehenden Ansprüche,
dadurch gekennzeichnet, daß die genannten zweiten Steuerbefehle für die Motordrehzahl so ermittelt werden, daß man einen Schub erhält, bei dem das Flugzeug ins Gleichgewicht gebracht werden kann im Falle eines Ausfalls eines der genannten Motoren bei einer vorher ermittelten Geschwindigkeit.

**14.** Einrichtung nach einem der Ansprüche 1 bis 13, dadurch gekennzeichnet, daß die Regelungsmittel (CONT1, CONT4), die einem Paar von gegenüberliegenden Motoren zugeordnet sind, miteinander verbunden sind.

**15.** Einrichtung nach einem der Ansprüche 1 bis 13, dadurch gekennzeichnet, daß alle genannten Regelungsmittel in eine zentrale Kontrolleinheit integriert sind.

**Claims**

**1.** Device for controlling the thrust of an aircraft (A), this thrust being generated by a number of engines (M1 to M4) which are set out more or less in a line (L-L) which is orthogonal to the longitudinal axis (X-X) of the aircraft (A), and are arranged respectively so that they are symmetric with respect to the said longitudinal axis (X-X), the said device comprising

- calculation units (UC1, UC4) which are associated respectively with each of the said engines, each of the said calculation units (UC1, UC4) being a unit for determining first commands for controlling the speed of the associated engine and for sending the said first commands to the said associated engine;
- control means (CONT1, CONT4) for respectively monitoring the operation of at least some of the said engines (M1, M4) and for detecting failures of the said monitored engines (M1, M4); and
- calculation means (MC), associated respectively at least with the calculation units (UC1, UC4) associated with the said monitored engines (M1, M4), for determining second commands for controlling the speed of the said monitored engines (M1, M4) making it possible to reduce the thrust of these engines relative to the said first commands,

characterized in that it additionally comprises switching means (COM) associated with the said calculation means (MC) and with the corresponding calculation units (UC1, UC4) and which:

- when the said monitored engines (M1, M4) are operating normally send the corresponding first commands to these engines; and,

- when one of the said monitored engines (M1) fails, send the corresponding second commands to at least one engine (M4) which is on the opposite side of the longitudinal axis (X-X) of the aircraft (A) to the said failed engine (M1).

**2.** Device according to Claim 1, characterized in that it comprises control means (CONT1, CONT4), calculation means (MC) and switching means (COM) associated with the two outer engines (M1, M4) which are the ones furthest from and one on each side of the longitudinal axis (X-X) of the aircraft (A), and intended, when one of the said outer engines (M1) fails, to reduce the thrust of the other outer engine (M4).

**3.** Device according to Claim 1, characterized in that it comprises control means, calculation means and switching means associated with each of the engines (M1 to M4) of the aircraft (A) and intended, when any one engine of the aircraft (A) fails, to reduce the thrust of the engine which is on the opposite side of the longitudinal axis (X-X) of the aircraft (A) to the said failed engine.

**4.** Device according to Claim 1, characterized in that it comprises control means (CONT1, CONT4), calculation means (MC) and switching means (COM) associated with each of the engines (M1 to M4) of the aircraft (A) and intended, when one of the two outer engines (M1) fails, these engines being the ones furthest away from and one on either side of the longitudinal axis (X-X), to reduce the thrust of all the engines on the opposite side of the longitudinal axis (X-X) of the aircraft (A) to the said failed engine.

**5.** Device according to Claim 1, characterized in that it comprises control means, calculation means and switching means associated with each of the engines (M1 to M4) of the aircraft (A) and intended, when any one engine of the aircraft (A) fails, to reduce the thrust of the outer engine which is on the opposite side of the longitudinal axis (X-X) of the aircraft (A) to the said failed engine.

**6.** Device according to Claim 1, characterized in that it comprises control means, calculation means and switching means associated with each of the engines (M1 to M4) of the aircraft (A) and intended, when any one engine of the aircraft (A) fails, to reduce the thrust of all the engines on the opposite side of the longitudinal axis (X-X) of the aircraft (A) to the said failed engine.

**7.** Device according to any one of Claims 1 to 6, characterized in that the said calculation means (MC) formulate the said second commands only when the aircraft (A) is in a defined flight envelope.

8. Device according to Claim 7, characterized in that the said flight envelope is defined by the following two combined conditions: the speed and the altitude of the aircraft are below pre-defined values.

9. Device according to any one of Claims 1 to 8, characterized in that the said calculation means (MC) and the said switching means (COM) are incorporated each time into the associated calculation unit (UC1).

10. Device according to any one of the preceding claims, characterized in that the said control means (CONT1, CONT4) detect failure of a monitored engine when the value of a parameter characteristic of the operation of the said engine lies outside an envelope of permissible predetermined values.

11. Device according to Claim 10, characterized in that the said parameter characteristic of the operation of the engine represents the speed of the low-pressure module of the said engine.

12. Device according to any one of the preceding claims, characterized in that the said second commands for controlling the engine speed are formulated as a function of the altitude, the temperature and the speed of the aircraft.

13. Device according to any one of the preceding claims, characterized in that the said second commands for controlling the engine speed are formulated in such a way as to obtain a thrust for which the aircraft can be steadied, should one of the said engines fail, at a predetermined speed.

14. Device according to any one of Claims 1 to 13, characterized in that the control means (CONT1, CONT4) associated with a pair of opposed engines are connected to each other.

15. Device according to any one of Claims 1 to 13, characterized in that all the said control means are incorporated into a central control unit.

FIG.1

FIG.2

FIG.3